# EUROPÄISCHE PATENTANMELDUNG

(11) **EP 1 970 862 A2**
(43) Veröffentlichungstag der Anmeldung: **17.09.2008**
(21) Anmeldenummer: 08001482.2
(22) Anmeldetag: 26.01.2008
(51) Int. Cl.: G06T 11/00

(54) **Verfahren zur Erzeugung einer Zeichen- und/oder Symbolfolge in einem der menschlichen Handschrift ähnlichen Format**

(30) Priorität: 12.03.2007 DE 102007011785
(71) Anmelder: meiller direct GmbH, 92421 Schwandorf (DE)
(72) Erfinder: Mändl, Michael, 92421 Schwandorf (DE); Wehner, Christian, 92224 Amberg (DE); Feller, Martin, 93413 Cham (DE)
(74) Vertreter: Glück, Martin

(57) **Zusammenfassung**

Die Erfindung betrifft ein Verfahren zur Erzeugung einer Zeichen- und/oder Symbolfolge in einem der menschlichen Handschrift ähnlichen Format in einem Computersystems, bei dem zur grafischen Ausgabe einer in das Computersystem eingegebenen oder im Computersystem gespeicherten Zeichen- und/oder Symbolfolge auf einem Ausgabemedium die zugeordneten grafischen Zeichen und/oder grafischen Symbole eines ersten elektronischen Schriftfonts ermittelt werden und über das Ausgabemedium des Computersystems ausgegeben werden. Vorteilhaft wird zumindest ein zweiter elektronischer Schriftfont abhängig vom ersten elektronischen Schriftfont erzeugt, dessen grafische Zeichen und/oder grafische Symbole eine zumindest teilweise reduzierte Zeichen- bzw. Symbolfläche aufweisen, wobei zur Erzeugung des zumindest einen eine reduzierte Zeichen- bzw. Symbolfläche aufweisenden elektronischen Schriftfonts zumindest eine Kopie des ersten elektronischen Schriftfonts erstellt und diese einer grafischen Manipulation unterzogen wird Zur grafischen Ausgabe zumindest eines Zeichens und/oder Symbols der Zeichen- und/oder Symbolfolge werden das zugeordnete grafische Zeichen und/oder Symbol des ersten elektronischen Schriftfonts und das zugeordnete grafische Zeichen und/oder Symbol des zumindest zweiten elektronischen Schriftfonts grafisch überlagert werden.

## Beschreibung

Die Erfindung betrifft ein Verfahren zur Erzeugen einer Zeichen- und/oder Symbolfolge in einem der menschlichen Handschrift ähnlichen Format gemäß dem Patentanspruch 1.

Zur Erzeugung von Texten mittels eines Computersystems werden unterschiedliche Schriftfonts anhand von Fontdateien zur Verfügung gestellt, welche eine Vielzahl von grafischen Buchstaben, Symbolen und Sonderzeichen aufweisen. Derartige Schriftfonts sind aus dem Stand der Technik hinreichend bekannt und werden zur Darstellung von Texten in unterschiedlichen Formaten auf einem Bildschirm oder zum Ausdruck auf einen Druckersystem unterschiedlicher Bauart, insbesondere zum Digitalen Drucken verwendet.

Ferner ist es bekannt einen personalisierten Schriftfont aus der persönlichen Handschrift eines Benutzers zu generieren, welcher analog zu den zuvor beschriebenen Schriftfonts zur Erzeugung und Ausgabe von Texten in einem Computersystem eingesetzt werden kann. Hierzu wird durch den jeweiligen Benutzer in die vorgegebenen Felder eines Formblattes das jeweilige Zeichen eines Zeichen- und Symbolsatzes einzeln handschriftlich eingetragen und somit ein kompletter persönlicher Zeichensatz des Benutzers erstellt, welcher die Grundlage für die Erzeugung eines digitalen Schriftfont bildet. Nachteilig werden zwar die individuellen Schriftzüge im Hinblick auf Form und Neigung der Strichelemente bzw. Punkte einer menschlichen Handschrift zeichenindividuell erfasst, jedoch die das Gesamtbild einer menschlichen Handschrift kennzeichnenden Merkmale vernachlässigt. Beispielsweise ist überlicherweise der Zeichenabstand einer menschlichen Handschrift variabel und/oder die Schriftbildlinie abweichend von einer Geraden ausgebildet. Bei genauer Betrachtung erkennt somit ein Betrachter eines derartigen Schriftstückes, dass es sich hierbei um eine maschinell erzeugte "Handschrift" einer Person handelt.

Ausgehend vom dargelegten Stand der Technik liegt somit der Erfindung die Aufgabe zugrunde, ein Verfahren zur Erzeugung einer Zeichen- und/oder Symbolfolge in einem der menschlichen Handschrift ähnlichen Format anzugeben, dass maschinell einfach und schnell durchführbar ist und dass die beschriebenen Nachteile des Standes der Technik beseitigt. Die Aufgabe wird ausgehend von den Merkmalen des Oberbegriffes des Patentanspruches 1 durch dessen kennzeichnende Merkmale gelöst.

Der wesentliche Aspekt des erfindungsgemäßen Verfahrens ist darin zu sehen, dass zumindest ein zweiter elektronischer Schriftfont abhängig vom ersten elektronischen Schriftfont erzeugt wird, dessen grafische Zeichen und/oder grafischen Symbole eine zumindest teilweise reduzierte Zeichen- bzw. Symbolfläche aufweisen, wobei zur Erzeugung des zumindest einen eine reduzierte Zeichen- bzw. Symbolfläche aufweisenden elektronischen Schriftfonts zumindest eine Kopie des ersten elektronischen Schriftfonts erstellt und diese einer grafischen Manipulation unterzogen wird. Ferner werden zur grafischen Ausgabe zumindest eines Zeichens und/oder Symbols der Zeichen- und/oder Symbolfolge das zugeordnete grafische Zeichen und/oder Symbol des ersten elektronischen Schriftfonts und das zugeordnete grafische Zeichen und/oder Symbol des zumindest zweiten elektronischen Schriftfonts grafisch überlagert. Besonders vorteilhaft wird den dadurch erzielten Farbintensitätswechsel innerhalb eines Zeichens eine handschriftähnliche Druckschrift grafisch erzeugbar, die dem Leser der maschinell erzeugten Druckschrift den Eindruck einer menschlichen Natur- bzw. Handschrift vermittelt. Insbesondere im Werbebereich kann dadurch der Eindruck einer individuellen Personalisierung eines Werbemediums erzeugt werden, und zwar wird der Empfänger durch die den Eindruck einer menschlichen Handschrift vermittelnden zumindest teilweisen Beschriftung des Werbemediums persönlich angesprochen.

Weiterhin vorteilhaft können abhängig vom ersten elektronischen Schriftfont mehrere jeweils eine unterschiedlich reduzierte Zeichen- bzw. Symbolfläche aufweisende elektronische Schriftfonts erzeugt werden und zur grafischen Ausgabe der Zeichen- und/oder Symbolfolge in einem der menschlichen Handschrift ähnlichen Format grafisch überlagert werden. Hierzu werden Kopien des ersten elektronischen Schriftfonts erstellt und diese einer grafischen Manipulation unterzogen, und zwar werden beispielsweise einzelne Abschnitte der Zeichen- bzw. Symbolflächen der Zeichen und/oder Symbole der Kopien des ersten elektronischen Schriftfonts zufällig oder nach einem vorgebaren Muster entfernt.

Zusätzlich kann die grafische Ausgabe der Zeichen- und/oder Symbolfolge gemäß weiterer Formatierungsparameter erfolgen, die den Textaufbau und/oder den Aufbau eines Textblockes vorgegeben. Der Textaufbau wird hierbei durch Textaufbauparameter, insbesondere durch die Schriftgröße, die Schriftstärke, den Kursivdruck, den Fettdruck, die Klein- und Großschreibung, den Zeichenabstand, den Wortabstand und/oder die Grundlinienverschiebung einer Textzeile definiert.

Analog hierzu wird der Aufbau eines Textblockes durch Textblockparameter, insbesondere die Ausrichtung des Zeileneinzugs, den Zeilenabstand und/oder den Zeilenumbruch vorgegeben.

Weitere vorteilhafte Ausbildungen der Erfindung, insbesondere ein Computersystem zur Durchführung des erfindungsgemäßen Verfahrens sind den weiteren Ansprüchen zu entnehmen.

Die Erfindung wird im Folgenden an einem Ausführungsbeispiel mittels Zeichnungen näher erläutert. Es zeigen:
- Fig. 1: beispielhaft einen ersten elektronischen Schriftfont und von diesem abgewandelte weitere elektronische Schriftfonts,
- Fig. 2: beispielhaft ein Computersystem zur Durchführung des erfindungsgemäßen Verfahrens zur Erzeugung einer Zeichen- und/oder Symbolfolge in einem der menschlichen Handschrift ähnlichen Format,
- Figur 3: beispielhaft die Überlagerung eines ersten und zweiten elektronischen Schriftfonts zur grafischen Ausgabe einer vorgegebenen Zeichen- und/oder Symbolfolge in einem der menschlichen Handschrift ähnlichen Format und
- Figur 4a, b: beispielhaft ein Textbeispiel vor und nach einer grafischen Manipulation des Textaufbaus.

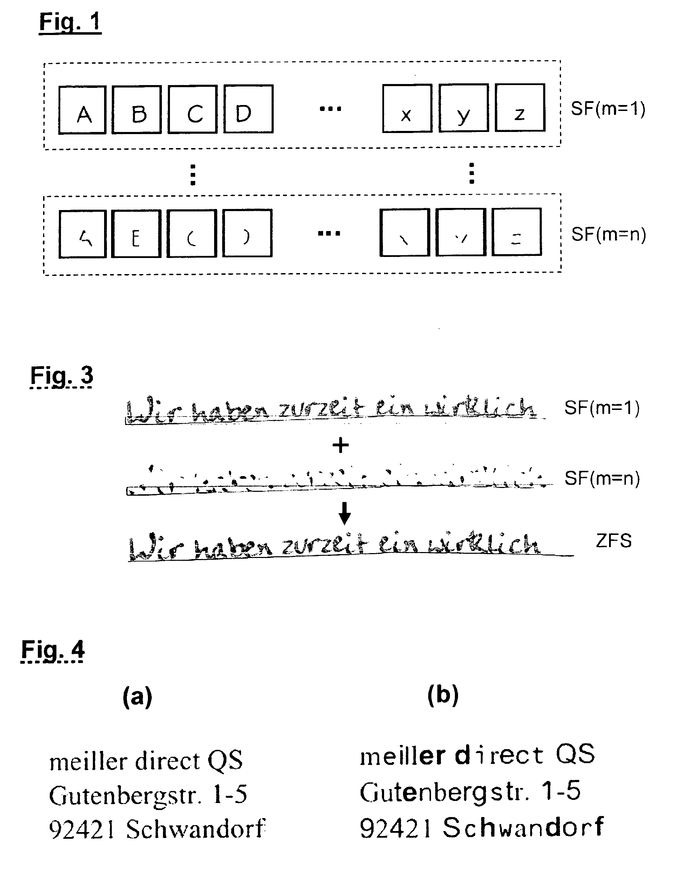

In Figur 1 ist beispielhaft in einer schematischen Darstellung der Aufbau eines elektronischen Schriftfonts SF dargestellt. Ein elektronischer Schriftfont SF besteht hierbei aus einer Vielzahl von grafischen Zeichen, insbesondere Buchstaben und Sonderzeichen sowie Symbolen.

Derartige elektronische Schriftfonts SF sind hinreichend aus dem Stand der Technik bekannt und werden überlicherweise in Form einer digitalen Fontdatei auf beliebigen Computersystemen CS zur Erzeugung von Zeichen- und/oder Symbolfolgen ZSF unterschiedlichen Formats vorgesehen.

Hierbei ist jedes einzelne Zeichen bzw. jedes einzelne Symbol eines elektronischen Schriftfonts SF in Form eines Grafikelementes hinterlegt, d.h. als digitale Information gespeichert. Die Grafikelemente weisen hierzu eine Zeichen- bzw. Symbolfläche mit einem vorgegebenen Hintergrund auf, wobei diese wiederum durch eine entsprechende Anordnung von einzelnen Bildpunkten ("Pixel") erzeugt wird. Mittels geeigneter Softwareapplikationen wird zur Ausgabe eines Zeichens und/oder Symbols eines elektronischen Schriftfonts SF durch einen zugeordneten Aufruf des Betriebssystems eines Computersystems CS das jeweilige Grafikelement geladen und anschließend weiterverarbeitet.

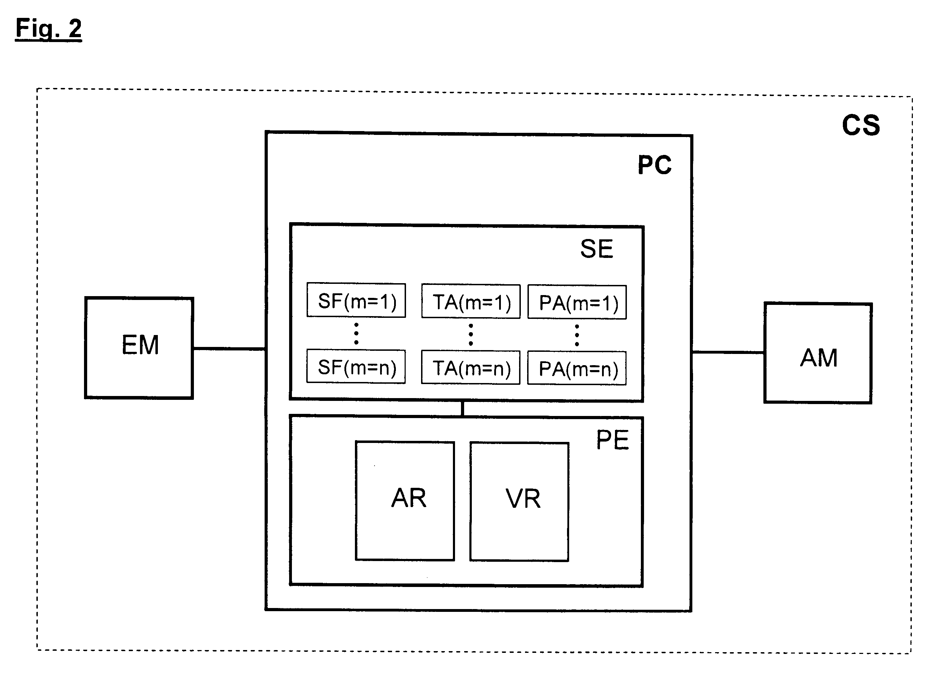

Figur 2 zeigt beispielhaft den schematischen Aufbau eines Computersystems CS zur Erzeugung einer Zeichen- und/oder Symbolfolge ZSF in einem der menschlichen Handschrift ähnlichen Format. Das Computersystem CS besteht aus einer Rechnereinheit bzw. einem Personalcomputer PC mit zumindest einer Speichereinheit SE und einer mit dieser verbundenen Prozessoreinheit PE.

Mittels in der Figur 2 nicht dargestellter gängiger Schnittstellen sind an den Personalcomputer PC zumindest ein Eingabemedium EM und zumindest ein Ausgabemedium AM angeschlossen. Das Eingabemedium EM kann beispielsweise durch eine Tastatur, einen Scanner oder ein weiteres beliebiges elektronisches Eingabegerät zur Erfassung von Zeichen und Symbolen gebildet werden. Analog hierzu kann als Ausgabemedium AM eine Monitoreinheit, ein Ein- oder Mehrfarben-Drucksystem, insbesondere ein Offset-Drucksystem oder ein Tiefdrucksystem oder ein ähnlich arbeitendes Drucksystems vorgesehen sein.

Vor der Erzeugung eines elektronischen Schriftfonts SF wird zunächst zumindest eine Handschriftenprobe einer Testperson nach an sich bekannten Verfahren erstellt. Hierzu füllt die Testperson beispielsweise ein vorgegebenes Formblatt aus, indem Sie in vorgegebene Felder sämtliche Zeichen und Symbole eines Zeichensatzes handschriftlich einträgt. Der hierdurch erzeugte handschriftliche Zeichensatz wird elektronisch erfasst und anschließend durch geeignete Bearbeitungsroutinen ausgewertet.

In einer vorteilhaften Ausführung der Erfindung werden zumindest zwei Handschriftproben von einer oder unterschiedlichen Testpersonen zur Erzeugung zumindest eines Satzes von elektronischen Schriftfonts SF ausgewertet. Die einzelnen Schriftfonts SF eines Satzes weisen jeweils zumindest teilweise unterschiedlich ausgebildete Zeichen bzw. Symbole auf. Somit werden unterschiedliche Ausführungen eines Zeichens bzw. Symbols in den unterschiedlichen Schriftfonts SF eines Satzes erfasst, unter denen bei der späteren Ausgabe ausgewählt werden kann, d.h. der handschriftliche Buchstabe A ist in beispielsweise fünf elektronischen Schriftfonts SF eines Satzes jeweils unterschiedlich grafisch ausgebildet und bei der Erzeugung einer mehrere Buchstaben A aufweisenden Zeichen- und/oder Symbolfolge ZSF kann auf unterschiedliche Ausführungsformen zurückgegriffen werden.

Die im Rahmen der Auswertung erhaltenen grafischen Zeichen und Symbole werden zu zumindest einem elektronischen Schriftfont SF zusammengefasst und in einem maschinenlesbaren Format in der Speichereinheit SE des Personalcomputers PC abgespeichert. Der strukturelle Aufbau der einzelnen grafischen Zeichen und Symbole entspricht hierbei den üblichen bekannten Schriftfonttypen. Auch sind bereits derartige die menschliche Handschrift nachbildende elektronische Schriftfonts SF kommerziell erwerbbar. Ein derartig erzeugter Schriftfont SF ist beispielhaft anhand einer schematischen Abbildung in Figur 1 dargestellt und mit dem Index m=1 versehen. Im Folgenden wird dieser als erster elektronischer Schriftfont SF(m=1) bezeichnet.

Erfindungsgemäß wird abhängig von dem vorliegenden ersten elektronischen Schriftfont SF(m=1) zumindest ein weiterer zweiter elektronischer Schriftfont SF(m=n) erzeugt, dessen grafische Zeichen und Symbole eine zumindest teilweise reduzierte Zeichen- bzw. Symbolfläche aufweisen. Mittels einer in der Prozessoreinheit PE ausgeführten Auswerteroutine AR wird beispielsweise zumindest eine Kopie, vorzugsweise n Kopien des ersten elektronischen Schriftfont SF(m=1) erstellt und als unterschiedliche Schriftfonts SF(m=2) bis SF(m=n) gespeichert.

Die zusätzlichen Schriftfonts SF(m=2) bis SF(m=n) werden einer grafischen Manipulation unterzogen, und zwar werden beispielsweise zufällig oder nach einem vorgebaren Muster einzelne Abschnitte der ursprünglichen Zeichen- bzw. Symbolfläche der Zeichen und Symbole des ersten elektronischen Schriftfonts SF(m=1) entfernt bzw. gelöscht. Die derartig hinsichtlich der Zeichen- bzw. Symbolfläche reduzierten Schriftfonts SF(m=2) bis SF(m=n) werden in der Speichereinheit SE hinterlegt. Beispielsweise können bei einer vorgegebenen Auflösung eines Zeichens von 800 x 600 Pixel mittels der Auswerteroutine AR diejenigen Bildpunkte ermittelt werden, die zur Darstellung der Zeichenfläche vorgesehen sind und mittels eines Zufallsgenerators abschnittsweise die ermittelten Bildpunkte gelöscht werden. Auch können die zuvor beschriebenen, unterschiedliche Ausführungsformen der einzelnen Zeichen bzw. Symbole aufweisenden Schriftfonts SF jeweils einer grafischen Manipulation unterzogen werden, um hierdurch die Anzahl m der verfügbaren Schriftfonts SF(m=2) bis SF(m=n) und die Variationsmöglichkeiten nochmals zu erhöhen.

In Figur 1 ist beispielhaft der erste Schriftfont SF(m=1) und der n-te Schriftfont SF(m=n) dargestellt, welcher im Vergleich zum ersten Schriftfont SF(m=1) bezüglich der Zeichen- bzw. Symbolfläche reduziert ist. Die örtliche Anordnung der verbleibenden Zeichen- bzw. Symbolflächen des jeweiligen graphischen Zeichens bzw. graphischen Symbols der unterschiedlichen Schriftfonts SF(m=1) bis SF(m=n) bleibt hierbei beispielsweise jedoch unverändert.

Zur erfindungsgemäßen Erzeugung einer Zeichen- und/oder Symbolfolge ZFS in einem der menschlichen Handschrift ähnlichen Format wird zur grafischen Ausgabe zumindest eines Zeichens und/oder Symbols der vorgegebenen Zeichen- und/oder Symbolfolge ZFS das zugeordnete Zeichen und/oder Symbol des ersten elektronischen Schriftfonts SF(m=1) und zumindest des zweiten elektronischen Schriftfonts SF(m=n) grafisch überlagert, d.h. in einer ersten grafischen Bearbeitungsebene ("layer 1") wird das Zeichen des ersten Schriftfonts SF(m=1) und in einer zweiten grafischen Bearbeitungsebene ("layer 2") das zugeordnete manipulierte Zeichen des zweiten Schriftfonts SF(m=n) dargestellt und somit bei der grafischen Ausgabe ein abgewandeltes Zeichen bzw. Symbol erzeugt, welches beim Betrachter aufgrund der variierenden Farbintensität den Eindruck eines handschriftlich erzeugten Zeichens oder Symbols erweckt. Die Bearbeitung der Zeichen und/oder Symbole der Zeichen- und/oder Symbolfolge ZFS kann hierbei einzeln, d.h. Zeichenweise oder Gruppenweise bzw. Wortweise erfolgen.

Figur 3 zeigt beispielsweise die Zeichenfolge ZFS="*Wir haben zurzeit ein wirklich",* einmal unter Verwendung des ersten elektronischen Schriftfonts SF(m=1) und einmal unter Verwendung des n-ten elektronischen Schriftfonts SF(m=n) sowie deren Überlagerung zur Erzeugung einer Zeichenfolge TFS *= "Wir haben zurzeit ein wirklich"* in einem der menschlichen Handschrift ähnlichen Format.

Zur Erzeugung der in Figur 3 dargestellten Zeichenfolge ZFS wird beispielsweise in der Prozessoreinheit PE eine Verarbeitungsroutine VR ausgeführt, welche aus den unterschiedlichen elektronischen Schriftfonts SF(m=1) bis SF(m=n) eine über herkömmliche Ausgabemedien AM ausgabefähige Zeichen- und/oder Schriftfolge TFS bzw. eine entsprechende Ausgabedatei generiert. Im Folgenden werden die einzelnen durch die Verarbeitungsroutine VR ausgeführten Prozessschritte beispielhaft erläutert.

Über das Eingabemedium EM wird beispielsweise durch einen Benutzer eine Zeichen- und/oder Symbolfolge ZFS in das Computersystem CS eingegeben und der Verarbeitungsroutine VR zugeführt oder eine bereits in der Speichereinheit SE hinterlegte Zeichen- und/oder Symbolfolge TFS mittels der Verarbeitungsroutine VR geladen.

Die eingegeben Zeichen bzw. Symbole der Zeichen- und/oder Symbolfolge ZFS werden einzeln oder gruppenweise gemäß in Verarbeitungsroutine VR hinterlegten Formatierungsparametern zu einem Gesamttext zusammengefügt.

Erfindungsgemäß wird zunächst zumindest ein zweiter von dem ersten elektronischen Schriftfont SF(m=1) abgeleiteter elektronischer Schriftfont SF(m=n) ausgewählt und gemeinsam mit dem ersten elektronischen Schriftfont SF(m=1) zur Darstellung der graphischen Zeichen und der graphischen Symbole der darzustellenden Zeichen- und/oder Symbolfolge ZFS eingesetzt, und zwar werden die jeweils aus dem ersten und zweiten elektronischen Schriftfont SF(m=1), SF(m=n) entnommenen Zeichen bzw. Symbole grafisch überlagert und erzeugen somit den Eindruck einer Zeichen- und Symbolfolge TFS, deren Zeichen- und Symbolfläche eine unterschiedliche Farbintensität aufweist.

Dies ist der menschlichen Handschrift nachempfunden, bei der ebenfalls bedingt durch den sich zeitlich ändernden Schreibdruck eine ähnliche Variation der Farbintensität innerhalb eines Zeichens der menschlichen Handschrift vorliegt. Hierdurch wird für den Leser bzw. Betrachter der Eindruck erweckt, es handle sich bei der erzeugten Zeichen- und/oder Symbolfolge um eine von Menschenhand geschriebene Zeichenfolge, und keinesfalls um eine maschinell erzeugte Zeichen- bzw. Symbolfolge ZFS. Dies ermöglicht eine maschinelle Beschriftung von beispielsweise Werbemedien im Direktmarketingbereich, um den Eindruck einer individuellen Personalisierung des jeweiligen Werbeschriftstücks durch einen Menschen zu erzeugen. Auch kann lediglich die Unterschrift unter einem Fließtext oder die Anrede durch eine erfindungsgemäße Zeichen- bzw. Symbolfolge ZFS ersetzt werden.

In einer bevorzugten Ausführungsform können weitere Formatierungsparameter vorgegeben werden. Beispielsweise können den Textaufbau angebende Textaufbauparameter TA(m=1) bis TA(m=n) und/oder den Aufbau eines Textblockes angebende Textblockparameter PA(m=1) bis PA(m=n) vorgegeben und in der Speichereinheit SE gespeichert werden.

Die Textaufbauparameter TA(m=1) bis TA(m=n) können beispielsweise die Schriftgröße, die Schriftstärke, den Kursivdruck, den Fettdruck, die Klein- und Großschreibung, den Zeichen- und Wortabstand und/oder die Grundlinienverschiebung der die Zeichen- und Symbolfolge ZFS bildenden Zeichen und Symbole definieren. Durch eine zeichen- oder wortindividuelle Auswahl unterschiedlicher Textaufbauparameter TA(m=1) bis TA(m=n) kann das erzeugte Schriftbild individuell angepaßt werden.

Ferner kann die Formatierung eines Textblockes durch Verwendung von unterschiedlichen Textblockparameter PA(m=1) bis PA(m=n) variiert werden. Insbesondere kann beispielsweise die Ausrichtung des Zeileneinzugs, der Zeilenabstand und/oder der Zeilenumbrüche usw. individuell vorgegeben werden.

Die Auswahl und/oder Kombination der unterschiedlichen Schriftfonts SF(m=1) bis SF(m=n), der Textaufbauparameter TA(m=1) bis TA(m=n) und/oder der Textblockparameter PA(m=1) bis PA(m=n) kann beispielsweise zufällig oder gemäß einem vorgegeben in der Verarbeitungsroutine VR implementierten Schema bzw. Muster erfolgen. Zur Verdeutlichung dessen ist in Figur 4 (a) und (b) jeweils ein identisches Textbeispiel unter Verwendung eines handelsüblichen Schriftfonts SF dargestellt.

Das in Figur 4(a) dargestellte Textbeispiel weist hierbei eine einheitlichen Textaufbau und einen einheitlichen Aufbau des Textblockes auf, wohingegen das in Figur 4 (b) dargestellte Textbeispiel durch einen zufälligen zeichenindividuellen Wechsel zwischen den vorgegebenen unterschiedlichen Textaufbauparametern TA(m=1) bis TA(m=n) und/oder Textblockparametern PA(m=1) bis PA(m=n) manipuliert ist. Eine Variation der Grundlinienverschiebung der Zeichen- und Symbolfolge TFS ist beispielsweise der Figur 3 zu entnehmen. Dort ist eine entlang einer Freihandlinie angeordnete Zeichen- und Symbolfolge TFS dargestellt.

Ebenso kann eine zufällige Auswahl von einzelnen Schriftfonts SF(m=1) bis SF(m=n) eines Satzes mit unterschiedlichen Ausführungsformen der einzelnen Zeichen bzw. Symbolen erfolgen.

Die Erfindung wurde voranstehend an einem Ausführungsbeispiel beschrieben. Es versteht sich, dass zahlreiche Änderungen und Modifikationen möglich sind, ohne dass der der Erfindung zugrundeliegende Erfindungsgedanke verlassen wird.

### Bezugszeichenliste

- SF(m=1) - SF(m=n): erster bis n-ter Schriftfont
- PA(m=1) - PA(m=n): erste bis n-te Textblockparameter
- TA(m=1) - TA(m=n): erste bis n-te Textaufbauparameter
- CS: Computersystem
- EM: Eingabemedium
- AM: Ausgabemedium
- PC: Personalcomputer
- SE: Speichereinheit
- PE: Prozessoreinheit
- AR: Auswerteroutine
- VR: Verarbeitungsroutine
- ZFS: Zeichen- und Symbolfolge

## Patentansprüche

1. Verfahren zur Erzeugung einer Zeichen- und/oder Symbolfolge (ZFS) in einem der menschlichen Handschrift ähnlichen Format in einem Computersystems (CS), bei dem zur grafischen Ausgabe einer in das Computersystem (CS) eingegebenen oder im Computersystem (CS) gespeicherten Zeichen- und/oder Symbolfolge (ZFS) auf einem Ausgabemedium (AM) die zugeordneten grafischen Zeichen und/oder grafischen Symbole eines ersten elektronischen Schriftfonts (SF(m= 1)) ermittelt werden und über das Ausgabemedium (AM) des Computersystems (CS) ausgegeben werden **dadurch gekennzeichnet, dass** zumindest ein zweiter elektronischer Schriftfont (SF(m=2) - SF(m=n)) abhängig vom ersten elektronischen Schriftfont (SF(m=1)) erzeugt wird, dessen grafische Zeichen und/oder grafische Symbole eine zumindest teilweise reduzierte Zeichen- bzw. Symbolfläche aufweisen, wobei zur Erzeugung des zumindest einen eine reduzierte Zeichen- bzw. Symbolfläche aufweisenden elektronischen Schriftfonts (SF(m=2) - SF(m=n)) zumindest eine Kopie des ersten elektronischen Schriftfonts (SF(m=1)) erstellt und diese einer grafischen Manipulation unterzogen wird und dass zur grafischen Ausgabe zumindest eines Zeichens und/oder Symbols der Zeichen- und/oder Symbolfolge (ZFS) das zugeordnete grafische Zeichen und/oder Symbol des ersten elektronischen Schriftfonts (SF(m=1)) und das zugeordnete grafische Zeichen und/oder Symbol des zumindest zweiten elektronischen Schriftfonts (SF(m=2) - SF(m=n)) grafisch überlagert werden.

2. Verfahren nach Anspruch 1, **dadurch gekennzeichnet, dass** abhängig vom ersten elektronischen Schriftfont (SF(m=1)) mehrere jeweils eine unterschiedlich reduzierte Zeichen- bzw. Symbolfläche aufweisende elektronische Schriftfonts (SF(m=2) - SF(m=n)) erzeugt werden und zur grafischen Ausgabe der Zeichen- und/oder Symbolfolge (ZFS) in einem der menschlichen Handschrift ähnlichen Format grafisch überlagert werden.

3. Verfahren nach Anspruch 1 oder 2, **dadurch gekennzeichnet, dass** einzelne Abschnitte der Zeichen- bzw. Symbolflächen der Zeichen und/oder Symbole der Kopie des ersten elektronischen Schriftfonts (SF(m=1)) zufällig oder nach einem vorgebaren Schema grafisch bearbeitet werden und/oder dass die Zeichen und/oder Symbole der Zeichen- und/oder Symbolfolge (ZFS) einzeln oder gruppenweise verarbeitet werden.

4. Verfahren nach einem der vorhergehenden Ansprüche, **dadurch gekennzeichnet, dass** die grafische Ausgabe der Zeichen- und/oder Symbolfolge (ZFS) gemäß weiterer Formatierungsparameter erfolgt, welche den Textaufbau und/oder den Aufbau eines Textblockes vorgegeben.

5. Verfahren nach Anspruch 5, **dadurch gekennzeichnet, dass** der Textaufbau durch Textaufbauparameter (TA(m=1) bis TA(m=n)), insbesondere durch die Schriftgröße, die Schriftstärke, den Kursivdruck, den Fettdruck, die Klein- und Großschreibung, den Zeichenabstand, den Wortabstand und/oder die Grundlinienverschiebung einer Textzeile definiert wird.

6. Verfahren nach Anspruch 5 oder 6, **dadurch gekennzeichnet, dass** der Aufbau eines Textblockes durch Textblockparameter (PA(m=1) bis PA(m=n)), insbesondere die Ausrichtung des Zeileneinzugs, den Zeilenabstand und/oder den Zeilenumbruch definiert wird.

7. Verfahren nach einem der vorhergehenden Ansprüche, **dadurch gekennzeichnet, dass** zur grafischen Ausgabe der Zeichen- und/oder Symbolfolge (ZFS) zumindest zwei Sätze von unterschiedlichen Textaufbauparametern (TA(m=1) bis TA(m=n)) und/oder Textblockparametern (PA(m=1) bis PA(m=n)) zufällig oder gemäß einem vorgegeben Schema ausgewählt werden.

8. Verfahren nach Anspruch 8, **dadurch gekennzeichnet, dass** die Auswahl zeichen- oder wortbasiert erfolgt.

9. Verfahren nach einem der vorhergehenden Ansprüche, **dadurch gekennzeichnet, dass** der erste elektronische Schriftfonts (SF(m=1)) durch grafische Auswertung zumindest einer Handschriftenprobe zumindest einer Testperson erzeugt wird.

10. Verfahren nach Anspruch 10, **dadurch gekennzeichnet, dass** ein Satz mehrerer erster elektronischer Schriftfonts (SF(m=1)) durch grafische Auswertung von mehreren Handschriftenproben zumindest einer oder mehrerer Testperson(en) erzeugt wird.

11. Computersystem (CS) bestehend aus einer Rechnereinheit (PC) mit zumindest einer Speichereinheit (SE) und einer mit dieser verbundenen Prozessoreinheit (PE) und zumindest einem Eingabe- und Ausgabemedium (EM, AM), **gekennzeichnet durch** eine in der Prozessoreinheit (PE) ausführbare Verarbeitungsroutine (VR) zur Durchführung des Verfahrens nach einem der vorhergehenden Ansprüche.

12. Computersystem (CS) nach Anspruch 12, **dadurch gekennzeichnet, dass** das Eingabemedium (EM) als Tastatur, Scanner oder ein weiteres elektronisches Eingabegerät zur Erfassung von Zeichen und Symbolen ausgebildet ist und/oder dass das Ausgabemedium (AM) als Monitoreinheit, Ein- oder Mehrfarben-Drucksystem, insbesondere als Offset-Drucksystem oder als Tiefdrucksystem oder ein ähnlich arbeitendes Drucksystem ausgebildet ist.
